# EUROPEAN PATENT SPECIFICATION

(11) **EP 4 370 487 B1**
(45) Date of publication and mention of the grant of the patent: **03.09.2025**
(21) Application number: 22747107.5
(22) Date of filing: 12.07.2022
(51) Int. Cl.: C05B 1/00

(54) **AQUEOUS COMPOSITION COMPRISING SEAWEED**
WÄSSRIGE ZUSAMMENSETZUNG MIT ALGEN
COMPOSITION AQUEUSE COMPRENANT DES ALGUES

(30) Priority: 12.07.2021 GB 202110025
(43) Date of publication of application: 22.05.2024
(73) Proprietor: Yara UK Limited, York, YO42 1DN (GB)
(72) Inventor: WARD, Stuart, Pocklington, York YO42 1DN (GB); BROWN, Jonathan, Pocklington, York YO42 1DN (GB); QUIGNON, Caroline, Pocklington, York YO42 1DN (GB); HATHWAY, Laura, Pocklington, York YO42 1DN (GB)
(74) Representative: Dummett Copp LLP
(86) International application number: PCT/GB2022/051791
(87) International publication number: WO 2023/285798

(56) References cited:
- CN-A- 106 348 828
- CN-A- 112 120 046
- US-A1- 2021 002 182
- RIGHINI HILLARY ET AL: "Use of algae in strawberry management", JOURNAL OF APPLIED PHYCOLOGY, KLUWER, DORDRECHT, NL, vol. 30, no. 6, 25 April 2018 (2018-04-25), pages 3551 - 3564, XP036671854, ISSN: 0921-8971, [retrieved on 20180425], DOI: 10.1007/S10811-018-1478-2

## Description

### Field of the invention

The present invention is related to the field of fertilizers, in particular liquid fertilizer compositions.

### Background of the invention

Plant nutrients can be divided into three main classes: primary or macronutrients, such as nitrogen (N), phosphorus (P) and potassium (K); secondary nutrients, such as calcium (Ca), magnesium (Mg), sulphur (S), and sodium (Na); and micronutrients, such as boron (B), copper (Cu), iron (Fe), manganese (Mn), molybdenum (Mo) and zinc (Zn). An adequate supply of these nutrients is required for healthy growth of plants and in modern agriculture, it is common practice to apply inorganic fertilizers to crops in order to improve yield and quality. Solid fertilizers such as prills or granules containing one or more of the primary nutrients (N, P and K) represent the most common type of fertilizer and are typically applied to the soil. However, liquid fertilizers are also available and are becoming increasingly important in many markets due to the benefits they offer the grower in terms of convenience, flexibility, accuracy of delivery, and ease of application. Liquid fertilisers containing primary, secondary and micronutrients, alone or in combination, are widely available and may be applied using a variety of methods such as spraying onto the soil, injection into the soil, banding, incorporation into the seedbed during drilling; in the irrigation water (via fertigation or hydroponics systems); by spray application onto the foliage of the crop (foliar application); or in seed treatment.

It is desirable for liquid fertilizers to be as concentrated as possible in order to minimize transport and storage costs, reduce packaging waste, improve productivity, and facilitate modern methods of application and dosing.

It is also desirable that liquid fertilizers comprise several nutrients to reduce the workload for the farmer.

In addition to nutrients, it is more and more common to provide biostimulants to crops. Biostimulants are additives that enhances plant growth, health and productivity by improving the nutrient-use efficiency of the crop, helping the crops tolerate abiotic stresses like heat, cold, drought or excess of water, and/or improving other characteristics of the crops, such as nutritional content, appearance and/or shelf-life.

The term "biostimulants" covers a wide variety of additives, such as bacterial or microbial inoculants, biochemical materials, amino acids, humic and fulvic acids and seaweed extracts.

Biostimulants can be distributed to crops in the same manner as fertilizers, and it is desirable to provide a composition that comprises one or more nutrient, in particular boron and phosphorus and one or more biostimulant.

CN107935747A (Sun, 2018) discloses a foliar fertiliser containing 18 wt% of seaweed, 2 wt% of boric acid, and 2 wt% of potassium dihydrogen phosphate.

CN109160863A (Feng, 2019) discloses a fertiliser containing calcium superphosphate, boric acid and seaweed meal.

CN108276208A (Wang, 2018) discloses a seed coating agent containing 4 wt%, related to the total amount of solids, of boric acid, 12 wt%, related to the total amount of solids, of dihydrogen potassium phosphate and 9 wt%, related to the total amount of solids, of an algae fertiliser.

CN112120046A (Song, 2020) discloses a nutrient solution containing 14 wt%, related to the total amount of solids, of boric acid, 21 wt%, related to the total amount of solids, of monopotassium phosphate, and 3 wt%, related to the total amount of solids, of seaweed meal.

CN106316590A (Wang, 2017) discloses an aqueous solution containing 8 wt% of dihydrogen potassium phosphate, 4 wt% of boric acid, and 3 wt% of Sargassum, a type of seaweed, powder.

### Summary of the invention

It was found that it was possible to prepare an aqueous composition comprising phosphorus, boron and seaweed extract, in particular an aqueous composition comprising phosphorus, in particular a phosphate salt, boron, in particular boric acid, and a seaweed extract.

In one aspect, the present disclosure provides an aqueous solution comprising phosphorus, from 2.0 to 20 weight% of boron, an alkanolamine and from 2.0 to 20 weight% of a seaweed extract.

In another aspect, the present disclosure provides a method for producing an aqueous composition according to the present disclosure, comprising the steps of: a) providing water or an aqueous solution; b) adding a source of phosphorus to the water or the aqueous solution provided in step a); c) adding a source of boron to the water or the aqueous solution provided in step a); d) adding a seaweed extract to the water or the aqueous solution provided in step a).

In another aspect, the present disclosure provides the use of the aqueous composition according to the present disclosure as a fertilizer, in particular as a foliar fertilizer.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the composition, in particular of the aqueous composition.

In one embodiment, the present disclosure provides an aqueous composition comprising phosphorus, an alkanolamine, boron, and a seaweed extract.

According to the invention, the aqueous solution comprises phosphorus, from 2.0 to 20 weight% of boron, and from 2.0 to 20 weight% of a seaweed extract.

It was found that the application of a composition comprising phosphorus, boron, and seaweed to strawberry plants increased the flower production and fruit production of the plants, compared to the application of a similar aqueous solution comprising the same amount of phosphorus and boron but lacking the seaweed extract.

The addition of seaweed extract to the fertilizer solutions also increased the amount of boron found in the fruits after harvest, increased the weight of the dried fruits, increased the amount of boron found in the shoots, the leaves and the fruits of the plants. Boron is known to be quite an immobile nutrient in crops, meaning that it will stay in the part of the plant where it entered, for examples leaves for a foliar application. However, tests performed on crops which received a composition according to the present disclosure comprising seaweed extract and boron showed increased boron content across the whole plant: shoot, fruits and leaves. An increased flowering rate is also thought to be connected to a high boron mobility as boron is known to be required for flower formation.

The components of the aqueous composition according to the present disclosure are fully dissolved in water, and stable over prolonged storage, i.e. no precipitation of water-insoluble material may be observed.

Phosphorus is one of the primary plant nutrients, hence phosphatic fertilizers (i.e. fertilizers containing phosphorus) represent a very important segment of the market.

Typical phosphorus sources used in the production of solid granular fertilizer intended for application onto the soil include single superphosphate, triple superphosphate and dicalcium phosphate which are only partially soluble in water.

In one embodiment, the aqueous composition comprises from 1.0 to 20 weight% of phosphorus expressed as P₂O₅, or from 2.0 to 10 weight%, from 3.0 to 10 weight%, from 4.0 to 10 weight%, from 3.0 to 9.0 weight%, from 4.0 to 9.0 weight%, from 5.0 to 10 weight%, from 6.0 to 10 weight%, from 5.0 to 9.0 weight%, or from 6.0 to 9.0 weight% of phosphorus expressed as P₂O₅. The aqueous composition may comprise one or more sources of phosphorus mentioned above.

In one embodiment, the aqueous composition comprises a phosphate salt, such as a salt selected from the group consisting of mono-ammonium phosphate (MAP), di-ammonium phosphate (DAP), mono-potassium phosphate (MKP), di-potassium phosphate (DKP), and alkanolamine phosphate. For applications requiring the fertilizer to be fully dissolved, such as in fertigation, water soluble phosphate salts such as mono-ammonium phosphate (MAP), di-ammonium phosphate (DAP), mono-potassium phosphate (MKP) and di-potassium phosphate (DKP) are widely used, and liquid fertilizer products can be manufactured thereof.

In one embodiment, the aqueous composition comprises a phosphoric acid. The phosphate salts as mentioned have the drawback that their water solubility is limited and they have a limited chemical compatibility with other fertilizer compounds at high concentration. Phosphoric acids may be used as a P-fertilizer in some situations. The concentration of typical commercially available grades of orthophosphoric acid is 75 weight% which equates to a P₂O₅ content of 54 weight%. The freezing point of 75 weight% orthophosphoric acid is -20 °C so this represents a very highly concentrated P source in a stable liquid form.

As used herein, phosphoric acid refers to a composition selected from the group consisting of orthophosphoric acid, any oligophosphoric acid, any polyphosphoric acid, and any mixtures thereof. The generic term, phosphoric acid, refers to the group of compounds comprising one or more phosphorus atoms, wherein the one or more phosphorus atoms are in the oxidation state +5, and the one or more phosphorus atoms are bound to oxygen atoms. H₃PO₄, also named orthophosphoric acid, is the smallest molecules in this group. But orthophosphoric acid can react with itself to form polymers thereof, such as pyrophosphoric acid, H₄P₂O₇, and triphosphoric acid, H₅P₃O₁₀. The linear oligophosphoric acids and polyphosphoric acids have the general formula Hₙ₊₂PₙO₃ₙ₊₁, where n is an integer. The oligophosphoric acids and polyphosphoric acids can also have m cycles in their structure, wherein m is an integer. The general formula of linear or cyclic oligophosphoric acids and polyphosphoric acids is Hₙ₊₂₋₂ₘPₙO₃ₙ₊₁₋ₘ, where n and m are integers. Oligophosphoric acids refer to the polymers wherein n is equal to or smaller than 10, polyphosphoric acids to the polymers wherein n is greater than 10.

The main solvent of the aqueous solution is water, but it may contain some co-solvents.

According to the invention, the aqueous composition comprises an alkanolamine, in particular wherein the alkanolamine is selected from the group consisting of mono-, di- and tri-ethanolamine, mono, di- and tri-isopropanolamine, and mixtures thereof. A drawback of using phosphoric acid as phosphorus source is the very low pKa of phosphoric acid, and an aqueous solution comprising phosphoric acid may have a pH from 0.5 to 2.5. Other fertilizer products that may be added to the aqueous composition may not tolerate such low pH. So it may be an advantage to add a basic component that neutralizes the acidity of phosphoric acid, while maintaining a very good solubility. Alkanolamines are basic components, that when added to an aqueous solution comprising phosphoric acid, effectively raises the pH of the solution and stabilizes the phosphate ions. Monoethanolamine is the smallest of the alkanolamines, is commercially available, not toxic, and has a low molecular weight. It was found out that alkanolamines were also efficient at stabilizing boric acid in aqueous compositions.

In one embodiment, the aqueous composition comprises from 1.0 to 50 weight%, from 5.0 to 50 weight%, or from 10 to 50 weight% of an alkanolamine.

In one embodiment, the aqueous composition comprises from 1.0 to 50 weight% of monoethanolamine, in particular from 5 to 50 weight%, more in particular from 10 to 50 weight% of mono-ethanolamine.

In one embodiment, the aqueous composition comprises from 2.0 to 10 weight%, from 3.0 to 10 weight%, from 4.0 to 10 weight%, from 3.0 to 9.0 weight%, from 4.0 to 9.0 weight%, from 5.0 to 10 weight%, from 6.0 to 10 weight%, from 5.0 to 9.0 weight%, or from 6.0 to 9.0 weight% of boron. It was found that it was possible to prepare an aqueous composition with a high concentration of boron such as above 2.0 weight%. It may be advantage to provide a solution with a high boron content to provide a high amount of boron in a single application. Boron is known to be involved in flowering processes, cell structure and general growth of crops.

In one embodiment, the aqueous composition comprises a compound selected from the group consisting of boric acid, sodium borate, a boron alkanolamine complex, such as boron monoethanolamine complex, and any mixture thereof. Boric acid, sodium borate, also called borax, and boron ethanolamine are common sources of boron for fertilizer products, in particular liquid fertilizer products. Boric acid is particularly advantageous because its boron content, 17.5 weight%, is higher than other boron sources. Furthermore, the solubility of boric acid in water is good (about 47 g/L at 20 °C). And boric acid may also form a complex with an alkanolamine, such as monoethanolamine, to form a boron alkanolamine complex, in particular boron monoethanolamine complex, which has the chemical formula C₂H₇NO·BH₃O₃. In a boron alkanolamine complex, the boron atom is still covalently bound to three hydroxy (OH) groups, and there is a non-covalent bond between the boron atom and the alkanolamine molecule. A boron ethanolamine complex is different from an alkanolamine borate: in an alkanolamine borate, one of the hydroxy group connected to the boron atom has been replaced with the alkoxy (C-O) group of the alkanolamine. For example monoethanolamine borate has the chemical formula of C₂H₈BNO₃, clearly different from the formula of boron ethanolamine complex.

In one embodiment, the seaweed extract is an extract from the group consisting of *Kappaphycus alvarezii, Ascophyllum Nodosum, Ecklonia maxima, Durvillea potatorum, Macrocystis pyrifera, Sargassum, Laminaria digitata* and any mixture thereof. Different species of seaweed are known to be suitable for use in agriculture.

The seaweed extract may be used in solid form, or as an aqueous solution. Seaweed extracts may be prepared from fresh seaweed according to procedures known in the art. For example seaweed extracts may be obtained by grinding dried seaweed and doing a chemical, biological or mechanical extraction. Seaweed-derived products can also be chemically treated, for example with a base and such products are referred to as alkaline seaweed extracts. It was noted that alkaline seaweed extracts, such as potassium seaweed extracts (obtained by treating seaweed extract with a potassium base, such as potassium hydroxide), have a higher water solubility. Dried seaweed extracts are commercially available from a wide range of suppliers. In one embodiment, the seaweed extract is an alkaline seaweed extract, in particular a potassium seaweed extract.

The seaweed extract may comprise at least 90 weight%, at least 95 weight%, at least 98 weight%, or at least 99 weight% of water-soluble material, but it may also comprise some water-insoluble material, such as less than 10 weight%, less than 5 weight%, less than 2 weight% or less than 1 weight% of water-insoluble material.

In one embodiment, the aqueous composition comprises from 2.0 to 15 weight%, from 3.0 to 15 weight%, from 2.0 to 14 weight%, from 3.0 to 14 weight%, from 3.0 to 10 weight%, or from 3.0 to 9.0 weight%, of the seaweed extract.

In one embodiment, the aqueous composition comprises from 1.0 to 20 weight% of phosphorus, from 2.0 to 20 weight% of boron and from 2.0 to 20 weight% of seaweed extract.

In one embodiment, the aqueous composition comprises from 1.0 to 20 weight% of phosphorus, an alkanolamine, such as mono-ethanolamine, from 2.0 to 20 weight% of boron and from 2.0 to 20 weight% of seaweed extract.

In one embodiment, the aqueous composition comprises from 5.0 to 20 weight% of phosphorus, from 5.0 to 20 weight% of boron and from 2.0 to 20 weight% of seaweed extract.

In one embodiment, the aqueous composition comprises from 5.0 to 20 weight% of phosphorus, an alkanolamine, such as mono-ethanolamine, from 5.0 to 20 weight% of boron and from 2.0 to 20 weight% of seaweed extract.

In one embodiment, the aqueous composition comprises from 5.0 to 20 weight% of phosphorus, in particular an alkanolamine phosphate salt, an alkanolamine, such as monoethanolamine, from 5.0 to 20 weight% of boron, in particular as boric acid or boron monoethanolamine, and from 2.0 to 20 weight% of seaweed extract. It was found that the combination of an alkanolamine phosphate salt, with a boron alkanolamine complex, such as boron monoethanolamine complex, and a seaweed extract allowed the preparation of a composition with a high content in phosphorus, boron, and seaweed extract with all components remaining in solution, i.e. no precipitation. Boric acid contains 17.5 weight% of boron.

In one embodiment, the aqueous composition comprises from 5.0 to 20 weight% of phosphorus, in particular an alkanolamine phosphate salt, from 5.0 to 20 weight% of boron, in particular as boric acid or boron monoethanolamine, and from 2.0 to 20 weight% of seaweed extract.

In one embodiment, the aqueous composition comprises from 5.0 to 20 weight% of phosphorus, in particular as an alkanolamine phosphate salt, from 5.0 to 20 weight% of boron, in particular as boric acid or boron monoethanolamine, and from 2.0 to 20 weight% of seaweed extract.

In one embodiment, the aqueous composition comprises from 5.0 to 10 weight% of phosphorus, in particular an alkanolamine phosphate salt, from 5.0 to 10 weight% of boron, in particular as boric acid or boron monoethanolamine, and from 5.0 to 15 weight% of seaweed extract.

In one embodiment, the aqueous composition comprises from 5.0 to 10 weight% of phosphorus, in particular as an alkanolamine phosphate salt, from 5.0 to 10 weight% of boron, in particular as boric acid or boron monoethanolamine, and from 5.0 to 15 weight% of seaweed extract.

In one embodiment, the aqueous composition comprises from 6.0 to 9.0 weight% of phosphorus, in particular an alkanolamine phosphate salt, from 6.0 to 9.0 weight% of boron, in particular as boric acid or boron monoethanolamine, and from 5.0 to 15 weight% of seaweed extract.

In one embodiment, the aqueous composition comprises from 6.0 to 9.0 weight% of phosphorus, in particular as an alkanolamine phosphate salt, from 6.0 to 9.0 weight% of boron, in particular as boric acid or boron monoethanolamine, and from 5.0 to 15 weight% of seaweed extract.

In one embodiment, the aqueous composition has a pH of from 5.0 to 10.0, in particular from 7.0 to 9.0. It may be an advantage that the aqueous solution has a pH around the neutral point to avoid degradation of one or more of its components. The neutral pH may be achieved by adding an alkanolamine when the aqueous solution contains phosphoric acid. It was also observed that seaweed extract generally had a higher water solubility around neutral pH or slightly basic pH.

In one embodiment, the aqueous solution comprising phosphoric acid contains one or more additional nutrients, in particular nutrients selected from the group consisting of nitrogen, potassium, calcium, magnesium, sulphur, sodium, copper, iron, manganese, molybdenum, and zinc.

In one embodiment, the aqueous composition comprises from 0 to 2.0 weight%, from 0 to 1.5 weight%, from 0 to 1.0 weight%, from 0 to 0.9 weight%, from 0 to 0.8 weight%, from 0 to 0.7 weight%, from 0 to 0.6 weight%, from 0 to 0.5 weight%, from 0 to 0.4 weight%, from 0 to 0.3 weight%, or from 0 to 0.2 weight% of water-insoluble material. The aqueous composition may comprise a very small amount of water-insoluble material, which makes it suitable to be applied as a foliar product, i.e. by spraying the aqueous composition, or a diluted solution thereof, on crops.

In another aspect, the present disclosure provides a method for producing an aqueous composition according to the present disclosure, comprising the steps of: a) providing water or an aqueous solution; b) adding a source of phosphorus to the water or the aqueous solution provided in step a); c) adding a source of boron to the water or the aqueous solution provided in step a); d) adding a seaweed extract to the water or the aqueous solution provided in step a).

An aqueous composition according to the present invention may be prepared by successively adding the components in an aqueous solution, in particular water. The order of addition of the sources of boron and phosphorus may be inverted, i.e. the source of boron may be first added to an aqueous solution, and the source of phosphorus may be added to the aqueous solution comprising the source of boron.

The source of phosphorus, such as orthophosphoric acid, may be added first, followed by other nutrient components, such as a boron source, in particular boric acid.

The aqueous solution used in step a) may be demineralised water, or tap water, or an aqueous solution comprising one or more compounds, such as nutrient sources.

Alkanolamines are often miscible with water, so aqueous solutions comprising alkanolamines may have a high concentration of alkanolamines. For example, it is possible to prepare an aqueous solution comprising 33 weight% of water and 67 weight% of monoethanolamine.

In one embodiment, the aqueous solution provided in step a) comprises from 10 to 75 weight%, from 20 to 75 weight%, from 30 to 75 weight%, or from 20 to 50 weight% of an alkanolamine, in particular monoethanolamine.

In one embodiment, the alkanolamine comprised in the aqueous solution provided in step a) is selected from the group consisting of mono-, di- and tri-ethanolamine, mono, di- and tri-isopropanolamine, and mixtures thereof.

In one embodiment, the molar ratio of phosphoric acid to mono-ethanolamine is from 3:1 to 1:3, from 3:1 to 1:2, from 3:1 to 1:1, from 2:1 to 1:2, or from 1:1 to 1:2.

In one embodiment, the source of phosphorus is added in step b) such that the final aqueous composition comprises from 1.0 to 10 weight% of phosphorus expressed as P₂O₅, in particular from 2.0 to 10 weight%, more in particular from 3.0 to 10 weight%, even more in particular from 4.0 to 10 weight%, even more in particular from 3.0 to 9.0 weight%, even more in particular from 4.0 to 9.0 weight% of phosphorus expressed as P₂O₅.

In one embodiment, the source of phosphorus is added in step b) such that the final aqueous composition comprises from 5.0 to 10 weight% of phosphorus expressed as P₂O₅.

In one embodiment, the aqueous composition obtained in the method according to the present disclosure comprises from 1.0 to 50 weight% of mono-ethanolamine, in particular from 5.0 to 50 weight%, more in particular from 10 to 50 weight% of mono-ethanolamine.

In one embodiment, the aqueous composition obtained in the method according to the present disclosure comprises from 1.0 to 50 weight%, from 15 to 50 weight%, from 20 to 50 weight%, from 10 to 40 weight%, from 15 to 40 weight%, or from 20 to 40 weight% of monoethanolamine.

In one embodiment, the source of boron added in step c) comprises boric acid or boron monoethanolamine.

In one embodiment, the aqueous composition obtained in the method according to the present disclosure comprises from 1.0 to 10 weight%, from 2.0 to 10 weight%, from 3.0 to 10 weight%, from 4.0 to 10 weight%, from 5.0 to 10 weight%, or from 4.0 to 9.0 weight% of boron.

In one embodiment, the seaweed extract added in step d) is an extract from a seaweed selected from the group consisting of *Kappaphycus alvarezii, Ascophyllum Nodosum, Ecklonia maxima, Durvillea potatorum, Macrocystis pyrifera, Sargassum, Laminaria digitata* and mixtures thereof.

In one embodiment, the seaweed extract is added in step d) such that the final aqueous composition obtained by the method comprises from 1.0 to 15 weight%, from 5.0 to 15 weight%, or from 5.0 to 10 weight% of the seaweed extract.

In one embodiment, the final aqueous composition obtained by the method comprises a phosphate salt, in particular an alkanolamine phosphate salt, more in particular monoethanolamine phosphate. In another aspect, the present disclosure provides the use of the aqueous composition according to the present disclosure as a fertilizer, in particular as a foliar fertilizer.

In another aspect, the present disclosure provides the use of the aqueous composition according to the present disclosure in a method for increasing the number of fruits in a crop.

In another aspect, the present disclosure provides the use of the aqueous composition according to the present disclosure in a method for increasing the boron content in the shoots of a crop.

### Example 1

To 190 mL of demineralised water was added 357 g of monoethanolamine (90 weight% in water). Next, 560 g of boric acid (99% pure) and the mixture was stirred at ambient temperature until the temperature of the mixture stabilized, and the boric acid was fully dissolved. Next, 180 g of phosphoric acid (75% pure) was added and the mixture was stirred at ambient temperature for 60 min until fully dissolved. The mixture had a volume of about 1 L, a pH of 8.5 and a density of 1.31 g/L.

Three different batches were prepared from this mother solution: one containing 50 g/L of a *Ascophyllum nodosum* extract, in particular a potassium *Ascophyllum nodosum* extract, such as extracts sold by BioAtlantis Ltd, a Irish company, one containing 100 g/L of the same *Ascophyllum nodosum* extract and one not containing any seaweed extract.

These solutions were applied at a rate of 1 or 2 I/ha to strawberry plants at the 8-leaf stage, i.e. just before flowering started.

Control plants receiving none of the compositions prepared above were also included in the trial.

The numbers of flowers was counted on each plant 30 days after the application of the composition comprising phosphorus, boron and optionally seaweed.

| **Experiment** | **Flower on a plant after 30 days (avg)** | **Standard deviation** | **Fruits produced by a plant after 60 days** | **Standard deviation** |
|---|---|---|---|---|
| Control | 4.5 | ±2.89 | 5.0 | ±1.63 |
| P and B, no seaweed (1 l/ha) | 4.3 | ±2.06 | 3.5 | ±1.73 |
| P and B, no seaweed (2 l/ha) | 5.0 | ±2.58 | 5.3 | ±1.71 |
| P and B, 50 g/l seaweed (1 l/ha) | 4.8 | ±1.26 | 6.5 | ±3.32 |
| P and B, 50 g/l seaweed (2 l/ha) | 8.0 | ±5.48 | 7.8 | ±2.06 |
| P and B, 100 g/l seaweed (1 l/ha) | 5.5 | ±4.8 | 3.0 | 12.16 |
| P and B, 100 g/l seaweed (2 l/ha) | 4.0 | ±1.83 | 6.3 | ±2.5 |

The plants receiving 2 l/ha of the solution comprising 50 g/l of seaweed extract showed a significant increase in the number of flowers produced after 30 days, and of the number of fruits produced after 60 days.

The boron content of the fruits and shoots of the plants were also measured.

| **Experiment** | **Amount of boron in a fruit (avg, in µg)** | **Standard deviation** | **Amount of boron in the shoots (avg, in µg)** | **Standard deviation** |
|---|---|---|---|---|
| Control | 408 | ±172 | 98 | ±9.5 |
| P and B, no seaweed (1 l/ha) | 536 | ±114 | 97 | ±61.4 |
| P and B, no seaweed (2 l/ha) | 660 | ±462 | 119 | 128.8 |
| P and B, 50 g/l seaweed (1 l/ha) | 746 | ±170 | 115 | ±26.4 |
| P and B, 50 g/l seaweed (2 l/ha) | 1019 | ±184 | 155 | 124.9 |
| P and B, 100 g/l seaweed (1 l/ha) | 858 | ±75 | 136 | 136.4 |
| P and B, 100 g/l seaweed (2 l/ha) | 554 | ±384 | 127 | ±42.1 |

The plants treated with the compositions comprising seaweed showed an increase in boron content in the fruits and shoots.

## Claims

1. An aqueous solution comprising phosphorus, from 2.0 to 20 weight% of boron, from 2.0 to 20 weight% of a seaweed extract, and an alkanolamine.

2. The aqueous solution according to claim 1, wherein the aqueous solution comprises from 1.0 to 10 weight% of phosphorus expressed as P₂O₅, in particular from 2.0 to 10 weight%, more in particular from 3.0 to 10 weight%, even more in particular from 4.0 to 10 weight%, even more in particular from 3.0 to 9.0 weight%, even more in particular from 4.0 to 9.0 weight% of phosphorus expressed as P₂O₅.

3. The aqueous solution according to claim 1 or 2, wherein the alkanolamine is selected from the group consisting of mono-, di- and tri-ethanolamine, mono, di- and tri-isopropanolamine, and mixtures thereof.

4. The aqueous solution according to any one of claims 1 to 3, wherein the aqueous solution comprises from 1.0 to 50 weight% of mono-ethanolamine, in particular from 5.0 to 50 weight%, more in particular from 10 to 50 weight% of mono-ethanolamine.

5. The aqueous solution according to any one of claims 1 to 4, wherein the aqueous solution comprises from 2.0 to 15 weight% of boron, in particular from 2.0 to 10 weight%, more in particular from 3.0 to 10 weight%, even more in particular from 4.0 to 10 weight%, even more in particular from 3.0 to 9.0 weight%, even more in particular from 4.0 to 9.0 weight% of boron.

6. The aqueous solution according to any one of claims 1 to 5, wherein the aqueous solution comprises boric acid or boron monoethanolamine, in particular from 10 to 50 weight% of boric acid or boron monoethanolamine.

7. The aqueous solution according to any one of claims 1 to 6, wherein the seaweed is a species selected from the group consisting of *Kappaphycus alvarezii, Ascophyllum Nodosum, Ecklonia maxima, Durvillea potatorum, Macrocystis pyrifera, Sargassum, Laminaria digitata* and mixtures thereof.

8. The aqueous solution according to any one of claims 1 to 7, wherein the aqueous solution comprises from 2.0 to 15 weight% of the seaweed extract.

9. The aqueous solution according to any one of claims 1 to 8, wherein the aqueous solution comprises a phosphate salt, in particular an alkanolamine phosphate salt, more in particular monoethanolamine phosphate.

10. The aqueous solution according to any one of claims 1 to 9, wherein the aqueous solution has a pH of from 5.0 to 10.0, in particular from 7.0 to 9.0.

11. The aqueous solution according to any one of claims 1 to 10, wherein the aqueous solution comprises from 5.0 to 10 weight% of phosphorus, from 5.0 to 10 weight% of boron, and from 5.0 to 15 weight% of seaweed extract.

12. A method for producing an aqueous solution according to any one of claims 1 to 11, comprising the steps of:
a) providing water or an aqueous solution;
b) adding a source of phosphorus to the water or the aqueous solution provided in step a);
c) adding a source of boron to the water or the aqueous solution provided in step a);
d) adding a seaweed extract to the water or the aqueous solution provided in step a).

13. Use of the aqueous solution according to any one of claims 1 to 11 as a fertilizer, in particular as a foliar fertilizer.

## Patentansprüche

1. Wässrige Lösung, enthaltend Phosphor, 2,0 bis 20 Gew.-% Bor, 2,0 bis 20 Gew.-% eines Seetang-Extrakts und ein Alkanolamin.

2. Wässrige Lösung nach Anspruch 1, wobei die wässrige Lösung 1,0 bis 10 Gew.-% Phosphor, ausgedrückt als P₂O₅, insbesondere 2,0 bis 10 Gew.-%, insbesondere 3,0 bis 10 Gew.-%, insbesondere 4,0 bis 10 Gew.-%, insbesondere 3,0 bis 9,0 Gew.-%, insbesondere 4,0 bis 9,0 Gew.-% Phosphor, ausgedrückt als P₂O₅, enthält.

3. Wässrige Lösung nach Anspruch 1 oder 2, wobei das Alkanolamin ausgewählt ist aus der Gruppe bestehend aus Mono-, Di- und Tri-Ethanolamin, Mono-, Di- und Tri-Isopropanolamin und Mischungen davon.

4. Wässrige Lösung nach einem der Ansprüche 1 bis 3, wobei die wässrige Lösung 1,0 bis 50 Gew.-% Monoethanolamin, insbesondere 5,0 bis 50 Gew.- %, insbesondere 10 bis 50 Gew.-% Monoethanolamin, enthält.

5. Wässrige Lösung nach einem der Ansprüche 1 bis 4, wobei die wässrige Lösung 2,0 bis 15 Gew.-% Bor, insbesondere 2,0 bis 10 Gew.-%, insbesondere 3,0 bis 10 Gew.-%, insbesondere 4,0 bis 10 Gew.-%, insbesondere 3,0 bis 9,0 Gew.-%, insbesondere 4,0 bis 9,0 Gew.-% Bor, enthält.

6. Wässrige Lösung nach einem der Ansprüche 1 bis 5, wobei die wässrige Lösung Borsäure oder Bor-Monoethanolamin, insbesondere 10 bis 50 Gew.-% Borsäure oder Bor-Monoethanolamin, enthält.

7. Wässrige Lösung nach einem der Ansprüche 1 bis 6, wobei der Seetang eine Spezies ist, die ausgewählt ist aus der Gruppe bestehend aus *Kappaphycus alvarezii, Ascophyllum Nodosum, Ecklonia maxima, Durvillea potatorum, Macrocystis pyrifera, Sargassum, Laminaria digitata* und Mischungen davon.

8. Wässrige Lösung nach einem der Ansprüche 1 bis 7, wobei die wässrige Lösung 2,0 bis 15 Gew.-% des Seetang-Extrakts enthält.

9. Wässrige Lösung nach einem der Ansprüche 1 bis 8, wobei die wässrige Lösung ein Phosphatsalz, insbesondere ein Alkanolaminphosphatsalz, insbesondere Monoethanolaminphosphat, enthält.

10. Wässrige Lösung nach einem der Ansprüche 1 bis 9, wobei die wässrige Lösung einen pH-Wert von 5,0 bis 10,0, insbesondere von 7,0 bis 9,0, aufweist.

11. Wässrige Lösung nach einem der Ansprüche 1 bis 10, wobei die wässrige Lösung 5,0 bis 10 Gew.-% Phosphor, 5,0 bis 10 Gew.-% Bor und 5,0 bis 15 Gew.-% Seetang-Extrakt enthält.

12. Verfahren zur Herstellung einer wässrigen Lösung nach einem der Ansprüche 1 bis 11, umfassend die Schritte:
a) Bereitstellen von Wasser oder einer wässrigen Lösung;
b) Zugabe einer Phosphorquelle zu dem Wasser oder der wässrigen Lösung, das/die in Schritt a) bereitgestellt wurde;
c) Zugabe einer Borquelle zu dem Wasser oder der wässrigen Lösung, das/die in Schritt a) bereitgestellt wurde;
d) Zugabe eines Seetang-Extrakts zu dem Wasser oder der wässrigen Lösung das/die in Schritt a) bereitgestellt wurde.

13. Verwendung der wässrigen Lösung nach einem der Ansprüche 1 bis 11 als Düngemittel, insbesondere als Blattdünger.

## Revendications

1. - Solution aqueuse comprenant du phosphore, de 2,0 à 20 % en poids de bore, de 2,0 à 20 % en poids d'un extrait d'algue et une alcanolamine.

2. - Solution aqueuse selon la revendication 1, dans laquelle la solution aqueuse comprend de 1,0 à 10 % en poids de phosphore exprimé en tant que P₂O₅, en particulier de 2,0 à 10 % en poids, plus particulièrement de 3,0 à 10 % en poids, encore plus particulièrement de 4,0 à 10 % en poids, encore plus particulièrement de 3,0 à 9,0 % en poids, encore plus particulièrement de 4,0 à 9,0 % en poids de phosphore exprimé en tant que P₂O₅.

3. - Solution aqueuse selon l'une des revendications 1 ou 2, dans laquelle l'alcanolamine est choisie dans le groupe consistant en la mono-, di- et tri-éthanolamine, la mono, di- et tri-isopropanolamine, et les mélanges de celles-ci.

4. - Solution aqueuse selon l'une quelconque des revendications 1 à 3, dans laquelle la solution aqueuse comprend de 1,0 à 50 % en poids de mono-éthanolamine, en particulier de 5,0 à 50 % en poids, plus particulièrement de 10 à 50 % en poids de mono-éthanolamine.

5. - Solution aqueuse selon l'une quelconque des revendications 1 à 4, dans laquelle la solution aqueuse comprend de 2,0 à 15 % en poids de bore, en particulier de 2,0 à 10 % en poids, plus particulièrement de 3,0 à 10 % en poids, encore plus particulièrement de 4,0 à 10 % en poids, encore plus particulièrement de 3,0 à 9,0 % en poids, encore plus particulièrement de 4,0 à 9,0 % en poids de bore.

6. - Solution aqueuse selon l'une quelconque des revendications 1 à 5, dans laquelle la solution aqueuse comprend de l'acide borique ou de la bore monoéthanolamine, en particulier de 10 à 50 % en poids d'acide borique ou de la bore monoéthanolamine.

7. - Solution aqueuse selon l'une quelconque des revendications 1 à 6, dans laquelle l'algue est une espèce choisie dans le groupe consistant en *Kappaphycus alvarezii, Ascophyllum nodosum, Ecklonia maxima, Durvillea potatorum, Macrocystis pyrifera, Sargassum, Laminaria digitata* et les mélanges de celles-ci.

8. - Solution aqueuse selon l'une quelconque des revendications 1 à 7, dans laquelle la solution aqueuse comprend de 2,0 à 15 % en poids de l'extrait d'algue.

9. - Solution aqueuse selon l'une quelconque des revendications 1 à 8, dans laquelle la solution aqueuse comprend un sel phosphate, en particulier un sel phosphate d'alcanolamine, plus particulièrement le phosphate de monoéthanolamine.

10. - Solution aqueuse selon l'une quelconque des revendications 1 à 9, dans laquelle la solution aqueuse a un pH de 5,0 à 10,0, en particulier de 7,0 à 9,0.

11. - Solution aqueuse selon l'une quelconque des revendications 1 à 10, dans laquelle la solution aqueuse comprend de 5,0 à 10 % en poids de phosphore, de 5,0 à 10 % en poids de bore et de 5,0 à 15 % en poids d'extrait d'algue.

12. - Procédé de production d'une solution aqueuse selon l'une quelconque des revendications 1 à 11, comprenant les étapes consistant à :
a) fournir de l'eau ou une solution aqueuse ;
b) ajouter une source de phosphore à l'eau ou à la solution aqueuse fournie à l'étape a) ;
c) ajouter une source de bore à l'eau ou à la solution aqueuse fournie à l'étape a) ;
d) ajouter un extrait d'algue à l'eau ou à la solution aqueuse fournie à l'étape a).

13. - Utilisation de la solution aqueuse selon l'une quelconque des revendications 1 à 11 comme engrais, notamment comme engrais foliaire.
